# DEMANDE DE BREVET EUROPEEN

(11) **EP 4 253 823 A1**
(43) Date de publication de la demande: **04.10.2023**
(21) Numéro de dépôt: 23164793.4
(22) Date de dépôt: 28.03.2023
(51) Int. Cl.: F17C 13/00

(54) **DISPOSITIF DE MAINTIEN D AU MOINS UN COMPOSANT SUR UNE TOUR DE CHARGEMENT ET/OU DE DÉCHARGEMENT D'UNE CUVE D'UN NAVIRE DESTINÉE À CONTENIR UN GAZ LIQUÉFIÉ**

(30) Priorité: 31.03.2022 FR 2202915
(71) Demandeur: Gaztransport et Technigaz, 78470 Saint-Rémy-lès-Chevreuse (FR)
(72) Inventeur: BARDIN, Florian, 78470 Saint-Rémy-lès-Chevreuse, (FR)
(74) Mandataire: Callu-Danseux, Violaine

(57) **Abrégé**

L'invention concerne un dispositif de maintien (9) d'au moins un composant sur une tour de chargement et/ou de déchargement (5) d'une cuve (2) d'un navire (1) destinée à contenir un gaz liquéfié, le dispositif de maintien (9) comprenant au moins une bague (91), au travers de laquelle passe le composant, et au moins un bras (92) qui comprend au moins un premier segment (921, 924) portant la bague (91) et un deuxième segment (922, 925) portant une interface de fixation (923) du dispositif de maintien (9) sur la tour de chargement et/ou de déchargement (5), et en ce que le premier segment (921, 924) et le deuxième segment (922, 925) sont configurés pour être déplacés l'un par rapport à l'autre selon au moins deux directions comprises dans un même plan (100, 400).

## Description

### Domaine technique

L'invention se rapporte au domaine du stockage et/ou transport d'une cargaison de gaz liquéfié, tels que du gaz naturel liquéfié, de l'éthane, de l'ammoniac ou encore du gaz de pétrole liquéfié.

Elle se rapporte plus particulièrement à un ensemble de chargement et/ou de déchargement comprenant une tour de chargement et/ou de déchargement pour une cuve étanche et thermiquement isolée d'un navire destinée à contenir ce gaz liquéfié.

### Arrière-plan technologique

Le gaz naturel liquéfié, communément connu sous l'acronyme « GNL », ou encore sous l'acronyme « LNG » pour « Liquefied Natural Gas », est une source d'énergie importante, composée d'environ 95% de méthane. Plus particulièrement le GNL est stocké à l'état liquide dans une cuve isolée thermiquement à une température proche de -160°C, le GNL occupant alors 1/600 du volume qu'il occuperait à l'état gazeux, permettant ainsi de faciliter le transport d'un premier site vers un second site.

Le GNL peut ainsi être transporté d'un site à l'autre par voie maritime à l'aide de navires appelés méthaniers, il est alors stocké dans des cuves étanches et thermiquement isolantes du méthanier.

Le GNL peut aussi être utilisé comme carburant pour un navire, tel qu'un navire de transport de marchandises, tel qu'un porte-conteneurs. Pour des raisons écologiques et économiques, l'utilisation du GNL comme carburant présente un avantage par rapport aux carburants classiques, notamment dérivés du pétrole.

Classiquement, la cuve de stockage du GNL comprend une tour de chargement et/ou de déchargement suspendue à un couvercle permettant l'obturation de la cuve. La tour de chargement et/ou de déchargement de la cuve peut comporter une structure de type tripode, c'est-à-dire comportant trois mâts verticaux reliés les uns aux autres par des traverses formant une structure en treillis.

La tour de chargement et/ou de déchargement peut comprendre une pluralité de pompes destinées à des usages divers, tels que le déchargement et/ou le chargement de la cuve en GNL. Dans un certain type de configuration, il est connu de séparer le moteur d'entraînement et l'élément d'aspiration de la pompe, notamment, afin de faciliter les opérations de maintenances et/ou les interventions en cas de dysfonctionnement du moteur d'entraînement.

Dans un tel cas, le moteur d'entraînement peut être disposé en dehors de la cuve de stockage, par exemple sur le couvercle, tandis que l'élément d'aspiration demeure immergé dans cette même cuve, une telle configuration s'inscrivant sous le terme anglais de « Deepwell pump ». Le moteur d'entraînement et l'élément d'aspiration d'une même pompe sont ainsi aménagés en des positions opposées de la cuve et sont séparés par une distance sensiblement égale à sa hauteur, de préférence comprise entre environ 10 à 30 mètres.

Le moteur d'entraînement est mécaniquement relié à l'élément d'aspiration par l'intermédiaire d'un arbre d'entraînement, logé dans un tube de la pompe. Le mouvement de rotation du moteur d'entraînement est ainsi transmis à l'élément d'aspiration et le tube canalise le gaz liquéfié de manière à entraîner son extraction en dehors de la cuve.

Il est nécessaire d'assurer la solidarisation des différents composants des pompes sur la tour de chargement et/ou de déchargement . A cet effet, la tour est équipée d'une pluralité de supports assurant la fixation des différents composants des pompes sur la tour. L'installation de tels supports peut néanmoins s'avérer longue et complexe, notamment parce qu'elle nécessite un alignement précis des composants des différentes pompes sur la tour, et il en résulte un surcoût d'exploitation important, notamment par le temps d'indisponibilité du navire.

La présente invention s'inscrit dans ce contexte et vise à faciliter les opérations de montage et/ou de démontage de la tour de déchargement et/ou de chargement et des composants fixés sur cette dernière.

### Résumé

La présente invention propose un dispositif de maintien d'au moins un composant sur une tour de chargement et/ou de déchargement d'une cuve d'un navire destinée à contenir un gaz liquéfié, le dispositif de maintien comprenant au moins une bague, au travers de laquelle passe le composant, et au moins un bras, caractérisé en ce que le bras comprend au moins un premier segment portant la bague et un deuxième segment portant une interface de fixation du dispositif de maintien sur la tour de chargement et/ou de déchargement, et en ce que le premier segment et le deuxième segment sont configurés pour être déplacés l'un par rapport à l'autre selon au moins deux directions comprises dans un même plan.

De préférence, le composant est un élément distinct de la tour de chargement et/ou déchargement et n'appartient pas donc pas à la tour de chargement et/ou déchargement.

De par la structure du dispositif de maintien, qui permet l'ajustement de la position du premier segment, portant la bague et donc le composant, par rapport au deuxième segment, qui est solidaire de la tour, l'emploi dudit dispositif de maintien contribue à simplifier l'installation de la tour de déchargement et/ou de chargement dans la cuve et des composants qui lui sont rattachés.

Selon une caractéristique de la présente invention, ledit plan est parallèle au premier segment et/ou au deuxième segment du bras. Alternativement, ledit plan peut s'étendre transversalement au premier segment et/ou au deuxième segment.

Le bras comprend le premier segment, le deuxième segment et l'interface de fixation. Le premier segment et le deuxième segment consistent en des pièces planes, par exemple en tôle, d'une épaisseur d'au moins 5mm afin d'assurer la résistance du bras.

La bague présente une structure cylindrique centrée sur l'axe d'extension du dispositif de maintien, au travers de laquelle traverse le composant. Autrement dit, la bague est en prise sur le composant et l'entoure au moins en partie.

Le premier segment et le deuxième segment du dispositif de maintien sont initialement dissociés l'un de l'autre, le premier segment portant la bague et le deuxième segment portant l'interface de fixation. De la sorte, le premier segment et la bague peuvent être installés sur le composant d'une pompe tandis que le deuxième segment et l'interface sont disposés sur la tour, puis la position du premier segment et du deuxième segment l'un par rapport à l'autre est ajustée avant d'effectuer leur solidarisation.

Alternativement, le premier segment et le deuxième segment peuvent être assemblés au cours d'une première étape, puis au cours d'une étape ultérieure, le composant peut être fixé à la bague portée par le premier segment.

De manière optionnelle, l'interface de fixation peut comprendre au moins un moyen de réglage de la position du dispositif de maintien sur la tour de chargement et/ou de déchargement. Le moyen de réglage peut consister en au moins un orifice oblong ou un orifice circulaire, compris dans l'interface de fixation, qui est configuré pour coopérer avec la tour de chargement et/ou de déchargement, par exemple avec au moins un orifice circulaire ou un orifice oblong de la tour.

Le dispositif de maintien selon l'invention est ainsi facilement monté, le bras dissociable et le positionnement ajustable du premier segment et du deuxième segment permettant de répondre aux contraintes de précisions accompagnant le montage des pompes sur la tour.

Selon une caractéristique de l'invention, la bague est centrée sur un axe d'extension du dispositif de maintien, l'axe d'extension s'étendant parallèlement au plan dans lequel le premier segment et le deuxième segment peuvent être déplacés l'un par rapport à l'autre.

Selon une caractéristique de l'invention, la bague est centrée sur un axe d'extension du dispositif de maintien, l'axe d'extension s'étendant orthogonalement au plan dans lequel le premier segment et le deuxième segment peuvent être déplacés l'un par rapport à l'autre, de préférence, l'axe d'extension s'étend perpendiculairement audit plan.

Selon une caractéristique de l'invention, la bague est composée d'au moins une première demi-coquille et une deuxième demi-coquille, la première demi-coquille et/ou la deuxième demi-coquille étant portée par le premier segment.

Chaque demi-coquille présente, par exemple, la forme d'un demi cylindre de forme complémentaire qui, une fois assemblés, reconstituent la bague. Avantageusement, la première demi-coquille et la deuxième demi-coquille peuvent présenter des structures sensiblement identiques, réduisant ainsi les frais de manufacture du dispositif de maintien.

De préférence, une paroi interne de la bague comprend au moins un patin de glissement permettant le déplacement du composant par rapport à la bague du dispositif de maintien.

Selon une caractéristique de l'invention, le dispositif de maintien comprend au moins un renfort solidaire du premier segment et de la bague et/ou du deuxième segment et de l'interface de fixation.

Le renfort peut, par exemple, présenter la forme d'une équerre qui s'étend perpendiculairement au premier segment et/ou au deuxième segment. Notamment, le dispositif de maintien peut comprendre une pluralité de renforts, par exemple régulièrement disposés entre une paroi externe de l'une des demi-coquilles de la bague et le premier segment de manière à en consolider la fixation.

En effet, la cargaison de gaz liquéfié subissant un phénomène de ballottement, traduit du terme anglais « sloshing », lors de son transport, des contraintes mécaniques non négligeables sont exercées sur la tour de chargement et/ou de déchargement et la ou les pompes qu'elle comprend. De telles contraintes peuvent résulter en une altération de la position des composants de la pompe par rapport à la tour mais également en une déformation des composants de la pompe. Il est donc primordial que le dispositif de maintien présente une structure suffisamment résistante pour supporter de telles contraintes.

De tels dispositifs de maintien visent à assurer le maintien optimal de composants sur la tour, par exemple un élément d'aspiration, davantage susceptibles de subir de telles contraintes de par leur aménagement aux abords de la paroi de fond de la cuve.

Selon un mode de réalisation de l'invention, le premier segment et le deuxième segment comportent chacun respectivement deux ailes s'étendant à distance l'une de l'autre, l'écartement entre les ailes du premier segment étant différent de l'écartement entre les ailes du deuxième segment, de manière à permettre un chevauchement entre chaque aile du premier segment avec une aile du second segment située en vis-vis. L'utilisation de plusieurs ailes permet une multiplication des points d'ancrage sur la tour, favorisant sa résistance aux contraintes mécaniques.

Selon une caractéristique de l'invention, l'écartement entre les ailes du premier segment est supérieur à l'écartement entre les ailes du deuxième segment.

Selon une caractéristique de l'invention, les ailes des premier et deuxième segments comportent chacune des faces internes disposées de manière à ce qu'une face interne d'une aile d'un segment soit disposée en vis-à-vis d'une face interne de l'autre aile dudit segment et des faces externes opposées audites faces internes, chaque face interne d'une aile du premier segment étant de préférence disposée en vis-à-vis d'une face externe d'une aile du deuxième segment.

Selon une caractéristique de l'invention, au moins un ensemble de liaison est disposé entre la face interne d'une aile d'un segment et la face externe d'une aile de l'autre segment disposé en vis-à-vis.

La présence de l'ensemble de liaison multiplie les possibilités de positionnement du premier segment et du deuxième segment l'un par rapport à l'autre.

Selon une caractéristique de l'invention, le premier segment et le deuxième segment sont solidarisés l'un à l'autre par des moyens d'assemblage, lesdits moyens d'assemblage étant de préférence amovibles.

Selon une caractéristique de l'invention, les moyens d'assemblage comprennent au moins un organe de fixation du premier segment sur le deuxième segment, le premier segment et/ou le second segment comprenant au moins un trou oblong qui reçoit l'organe de fixation. A titre d'exemple, l'organe de fixation peut être un système vis-écrou.

Dans le mode de réalisation où le premier segment supporte la paroi externe d'une des demi-coquilles, le premier segment peut comprendre une découpe de forme complémentaire à la paroi externe de cette demi-coquille de manière à faciliter son intégration. Dans une telle configuration, le premier segment peut comprendre une paire de trous oblongs, les trous oblongs étant disposés de part et d'autre de la découpe. Particulièrement, au moins le trou oblong peut s'étendre parallèlement à l'une des deux directions d'ajustement comprises dans le plan dans lequel le premier segment et le deuxième segment peuvent être déplacés l'un par rapport à l'autre.

Selon une caractéristique de l'invention, le premier segment et le second segment comprennent chacun au moins un trou oblong au moins partiellement disposé en vis-à-vis l'un de l'autre, le trou oblong d'un segment s'étendant majoritairement dans une direction perpendiculaire à une direction d'extension majoritaire du trou oblong de l'autre segment.

L'invention concerne également un ensemble de chargement et/ou de déchargement pour une cuve d'un navire destinée à contenir un gaz liquéfié comprenant une tour de chargement et/ou de déchargement munie d'au moins un mât destiné à s'étendre dans la cuve, au moins un dispositif de déchargement et au moins un dispositif de maintien tel que décrit ci-dessus maintenant au moins une partie du dispositif de déchargement sur la tour de chargement et/ou de déchargement, le dispositif de maintien maintenant de préférence au moins une partie du dispositif de déchargement sur le mat.

De préférence, le dispositif de déchargement est un élément distinct et n'appartient pas à la tour de chargement et/ou de déchargement.

La tour de chargement et/ou de déchargement est composée d'au moins un mât qui s'étend sur tout ou partie de la hauteur de la cuve, c'est-à-dire entre une paroi supérieure et une paroi de fond de la cuve, les mâts étant fixes par rapport à la cuve. Avantageusement, la tour de chargement et/ou de déchargement peut comprendre deux ou trois mâts. Additionnellement, ledit ensemble de chargement et/ou de déchargement peut comprendre un couvercle destiné à obturer une ouverture de la paroi supérieure de manière à rendre la cuve étanche et thermiquement isolante, le couvercle maintenant la tour de chargement et/ou de déchargement suspendue dans la cuve et le couvercle étant solidaire d'au moins le mât.

Plus particulièrement, une pluralité de dispositifs de maintien peut assurer le rattachement d'un même composant à la tour, autrement dit, le même composant traverse les bagues respectives d'une pluralité de dispositifs de maintien.

Selon une caractéristique de la présente invention, le dispositif de déchargement comprend au moins un élément d'aspiration, disposé dans la cuve, et un ensemble d'entraînement de l'élément d'aspiration, disposé en dehors de la cuve, l'élément d'aspiration et l'ensemble d'entraînement étant reliés l'un à l'autre par un conduit de déchargement, la bague du dispositif de maintien entourant au moins en partie le conduit de déchargement.

De préférence, le dispositif de déchargement comprend également un arbre d'entrainement reliant mécaniquement l'élément d'aspiration et l'ensemble d'entraînement afin de transmettre un mouvement de rotation de l'ensemble d'entraînement à l'élément d'aspiration. Également, le dispositif de déchargement comprend un tube qui s'étend au moins en partie dans la cuve et qui loge l'arbre d'entraînement.

De préférence, le dispositif de déchargement est une pompe.

L'invention propose aussi une cuve d'un navire destinée à contenir un gaz liquéfié comprenant un ensemble de chargement et/ou de déchargement tel que décrit précédemment.

L'invention propose aussi un procédé de montage d'un dispositif de déchargement sur une tour de chargement et/ou de déchargement à l'aide d'au moins un dispositif de maintien tel que précédemment décrit, comprenant la fixation du deuxième segment sur la tour de chargement et/ou de déchargement par l'intermédiaire de l'interface de fixation, ledit procédé comportant les étapes suivantes :
- une première étape de fixation du premier segment et de la deuxième demi-coquille portée par le premier segment sur le deuxième segment dans une première position dite de réglage dans laquelle le premier segment est positionné au plus proche de la tour de chargement et/ou de déchargement ;
- une deuxième étape de positionnement définitif d'au moins un élément du dispositif de déchargement dans la cuve ;
- une troisième étape de déplacement du premier segment et de la deuxième demi-coquille vers une deuxième position dite définitive dans laquelle la deuxième demi-coquille est positionnée au plus près de l'élément du dispositif de déchargement ;
- une quatrième étape d'assemblage et de fixation de la première demi-coquille sur la deuxième demi-coquille de manière à entourer ledit élément du dispositif de déchargement entre la première demi-coquille et la deuxième demi-coquille.

Selon une caractéristique de la présente invention, l'élément du dispositif de déchargement est un conduit de déchargement.

L'invention propose aussi un navire pour le transport d'un produit liquide froid, le navire comportant une double coque et une cuve telle que décrite précédemment disposée dans la double coque.

Alternativement, l'invention peut concerner une structure terrestre comprenant au moins une cuve telle que précédemment décrite.

L'invention propose aussi un système de transfert pour un produit liquide froid, le système comportant un navire tel que décrit précédemment, des canalisations isolées agencées de manière à relier la cuve installée dans la double coque du navire à une installation de stockage flottante ou terrestre et une pompe pour entraîner un fluide à travers les canalisations isolées depuis ou vers l'installation de stockage flottante ou terrestre vers ou depuis la cuve du navire.

L'invention propose aussi un procédé de chargement ou déchargement d'un navire tel que décrit précédemment, dans lequel on achemine un fluide à travers des canalisations isolées depuis ou vers une installation de stockage flottante ou terrestre vers ou depuis la cuve du navire.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La figure 1 est une vue schématique d'un navire comportant une cuve de stockage de gaz liquéfié intégrant un ensemble de chargement et/ou de déchargement selon l'invention ;
[fig.2] La figure 2 est une vue schématique en perspective de l'ensemble de chargement et/ou de déchargement de la figure 1 ;
[Fig 3] La figure 3 est une vue schématique en perspective d'une base de l'ensemble de chargement et/ou de déchargement de la figure 2 ;
[Fig 4a et 4b] Les figures 4a et 4b sont deux vues rapprochées de côté, réalisées selon des orientations différentes, d'une partie de l'ensemble de chargement et/ou de déchargement de la figure 2 ;
[Fig 5] La figure 5 est une vue en perspective d'un dispositif de maintien selon l'invention appartenant à l'ensemble de chargement et/ou de déchargement de la figure 2, réalisé selon un premier mode de réalisation ;
[Fig 6] La figure 6 est une vue en perspective éclatée du dispositif de maintien tel que représenté à la figure 5 ;
[Fig 7] La figure 7 est une vue en perspective du dispositif de maintien selon l'invention, réalisé selon un second mode de réalisation ;
[Fig 8] La figure 8 est une vue en perspective éclatée du dispositif de maintien tel que représenté à la figure 7 ;
[Fig 9a à 9d] Les figures 9a à 9d représentent différentes étapes de montage du dispositif de maintien réalisé selon le second mode de réalisation sur des éléments de l'ensemble de chargement et/ou de déchargement de la figure 2 ;
[Fig 10] La figure 10 est une représentation schématique écorchée d'un navire comportant une cuve de stockage de gaz naturel liquéfié et d'un terminal de chargement/déchargement de cette cuve.

### Description des modes de réalisation

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites.

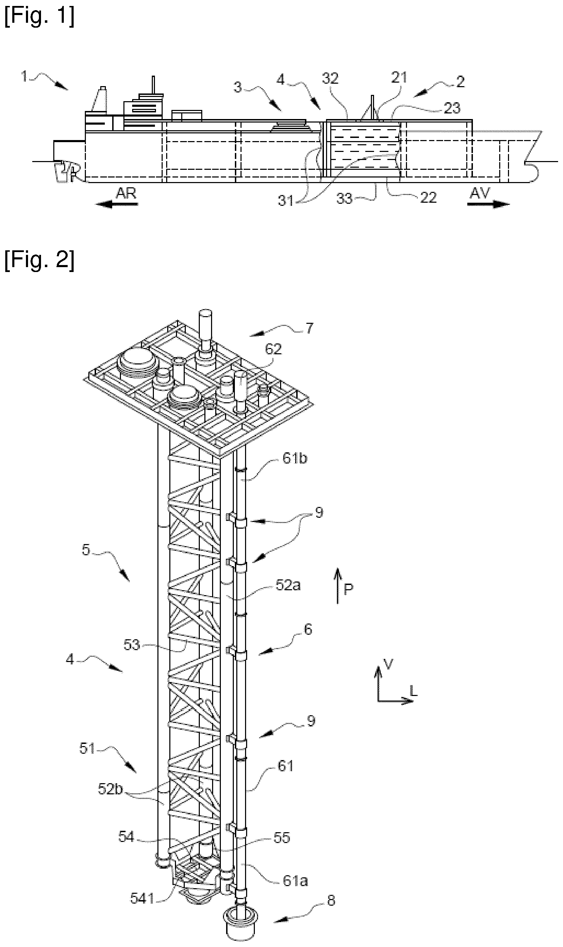

La figure 1 représente un navire 1 de transport d'un gaz liquéfié. Le navire comprend au moins une cuve 2 destinée au stockage de gaz à l'état liquide, particulièrement du gaz naturel liquéfié (abrégé « GNL »), du gaz de pétrole liquéfié (GPL) ou tout autre gaz liquéfié, tel que de l'ammoniac. De préférence, le gaz transporté est liquide à une température cryogénique.

Le navire 1 comprend une structure porteuse 3 destinée à recevoir les parois de la cuve 2. La structure porteuse 3 est notamment formée par la double coque du navire 1. La structure porteuse 3 présente une forme générale polyédrique. La structure porteuse 3 comporte des parois transversales 31 avant et arrière, dites parois de cofferdam du navire s'étendant transversalement à la direction longitudinale du navire 1. La structure porteuse 3 comporte également une paroi supérieure 32 et une paroi inférieure 33 s'étendant selon la direction longitudinale du navire et reliant les parois transversales 31 avant et arrière.

Ainsi, les parois supérieure 32, inférieure 33 et transversales 31 forment des parois porteuses de la structure porteuse. Ces parois porteuses présentent une surface délimitant un espace interne dans lequel est logée la cuve 2. La cuve 2 comporte une pluralité de parois de cuve, chaque paroi de cuve est ancrée sur une paroi porteuse respective de la structure porteuse 3. De manière traditionnelle, la paroi transversale arrière est celle orientée vers le château du navire, tandis que la paroi transversale avant est celle orientée vers la proue.

De préférence, la cuve 2 est une cuve à membrane présentant une structure multicouche. La cuve comprend, dans une direction d'épaisseur de l'extérieur vers l'intérieur de la cuve, une barrière thermiquement isolante secondaire, une membrane étanche secondaire reposant sur la barrière thermiquement isolante secondaire, une barrière thermiquement isolante primaire reposant sur la membrane étanche secondaire et une membrane étanche primaire reposant sur la barrière thermiquement isolante primaire et destinée à être en contact avec le gaz liquéfié contenu dans la cuve 2. Ainsi, afin de maintenir le gaz à l'état liquide, la cuve est étanche et thermiquement isolée.

La cuve 2 est équipée d'un ensemble de chargement et/ou de déchargement 4 selon l'invention qui permet selon le mode d'utilisation souhaité, l'extraction du gaz liquéfié hors de la cuve, mais également l'alimentation de la cuve en gaz liquéfié.

L'ensemble de chargement et/ou de déchargement 4 comprend au moins une tour de chargement et/ou de déchargement 5, un dispositif de déchargement 6 et un couvercle 7 destiné à fermer un volume de stockage de la cuve 2. Dans la suite de la description, la tour de chargement et/ou de déchargement sera nommée la tour par souci de simplicité.

Plus particulièrement, la cuve 2 comprend une ouverture 21, ménagée dans la paroi supérieure 23 de la cuve destinée notamment à permettre le passage de la tour 5 dans l'enceinte de la cuve 2, par exemple lors de son installation. L'ouverture 21 est configurée pour coopérer avec le couvercle 7 de l'ensemble de chargement et/ou de déchargement 4, qui, lorsque la tour 5 est installée dans la cuve, s'étend parallèlement à la paroi supérieure 23 de la cuve 2 et vient obturer l'ouverture 21 pour rendre la cuve étanche et thermiquement isolée.

Le couvercle 7 consiste en une plaque plane rendue solidaire de la paroi supérieure 23 de la cuve par soudage et/ou au moyen d'organes de fixations, tels qu'un système vis/écrou. Le couvercle 7 est constitué d'un ensemble de pièces métalliques lui conférant une résistance mécanique et peut aussi comprendre une isolation thermique. Le couvercle 7 est configuré pour maintenir la tour 5 suspendue dans la cuve.

Tel que visible à la figure 2, le couvercle 7 est au moins en partie traversé par la tour 5 et par le dispositif de déchargement 6.

La tour 5 comprend une structure 51 qui s'étend suivant une direction d'allongement principal P selon la direction verticale V, comprenant au moins trois mâts 52. De manière plus précise, la structure 51 de la tour 5 comprend également une structure en treillis 53 destinée à relier entre eux les différente mâts 52 de la tour 5 afin de rigidifier cette dernière. La structure en treillis 53 est composée d'une pluralité de poutrelles cylindriques entrecroisées s'étendant entre au moins deux mâts 52 de la tour, sur tout ou partie de sa hauteur.

De préférence, chacun des trois mâts 52 traverse le couvercle 7 de la cuve. On définit alors un mât avant 52a et deux mâts arrière 52b, définis selon un sens d'avancement A du navire, visible à la figure 1, dans des conditions normales de navigation, le mât avant 52a étant le mât de la structure 51 le plus en avant dans la cuve 2. Ainsi, les mâts arrière 52b sont situés à proximité de la paroi transversale arrière de la structure porteuse 3, tandis que le mât avant 52a est lui orienté vers la paroi transversale avant. En d'autres termes, selon la direction longitudinale du navire, les mâts arrière 52b sont interposés entre la paroi transversale arrière de la structure porteuse 3 et le mât avant 52a.

Comme visible à la figure 2, la structure 51 présente en projection une forme sensiblement triangulaire dont chacun des mâts 52 forme un des sommets de ce triangle. Ainsi, le triangle formé par la structure 51 comprend au moins une base définie par une droite passant par les deux mâts arrière 52b et un sommet défini par le mât avant 52a autrement appelé sommet avant.

Ainsi, la tour 5 comporte une pluralité de mâts 52 s'étendant du couvercle 7 jusqu'à la paroi de fond 22 de la cuve 2, au droit de l'ouverture 21.

Chaque mât 52 de la tour 5 consiste en une tige creuse, de section circulaire et pouvant, par exemple, être réalisé en acier inoxydable. Un mât 52 est composé d'une pluralité de segments cylindriques soudés les uns aux autres. Une première extrémité du mât s'étend aux abords de la paroi supérieure 23 de la cuve, une deuxième extrémité du mât, opposée à la première extrémité, s'étend aux abords de la paroi de fond 22 de la cuve. Ainsi, les mâts 52 définissent chacun un conduit pouvant, par exemple, contenir au moins un élément de pompe.

Les mâts 52 de la tour 5 sont, aux abords de leur deuxième extrémité respective, maintenus solidaires au moyen d'une armature de base 54 qui traverse au moins en partie la paroi de fond 22 de la cuve 2. De manière plus précise, l'armature de base 54 comprend au moins une plateforme 541 solidaire de chacun des mâts 52 de la structure 51 de la tour 5 et un pied 542 qui s'étend depuis la plateforme 541 et est rendu solidaire de la paroi de fond 33 de la structure porteuse 3 en traversant la paroi de fond 22 de la cuve 2.

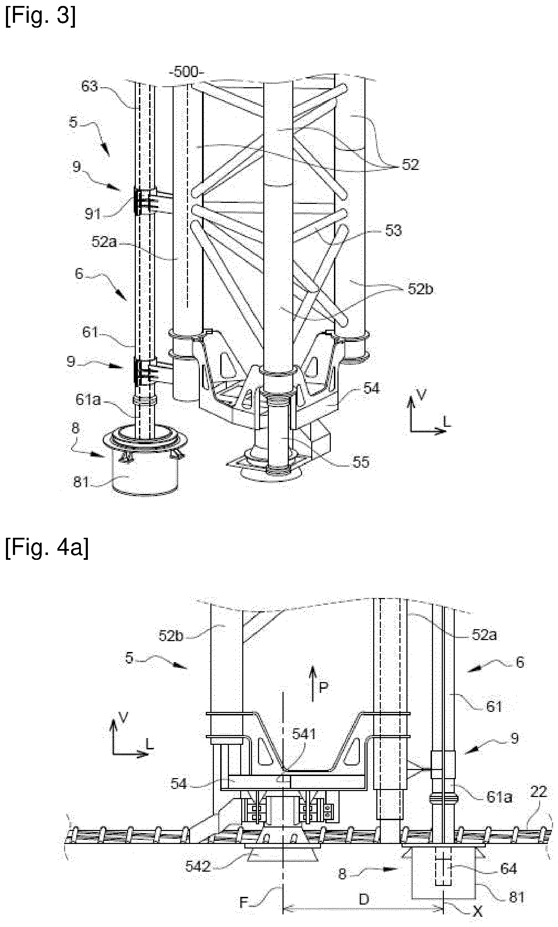

Dans l'exemple illustré aux figures 2 et 3, l'un des mâts arrière 52b de la tour 5 est équipé d'une pompe de déchargement 55 logée au moins en partie dans la tige creuse du mât 52b. L'autre mât arrière 52b et le mât avant 52a sont des mâts structurels de soutien de la tour et du dispositif de déchargement 6.

Ces mâts structurels peuvent également servir de soutien à un conduit de chargement en gaz liquéfié, non représenté, dont la fonction est de permettre le remplissage de la cuve en gaz liquéfié, mais également à une pompe d'alimentation destinée à l'alimentation en gaz liquéfié d'un moteur, non représenté, du navire

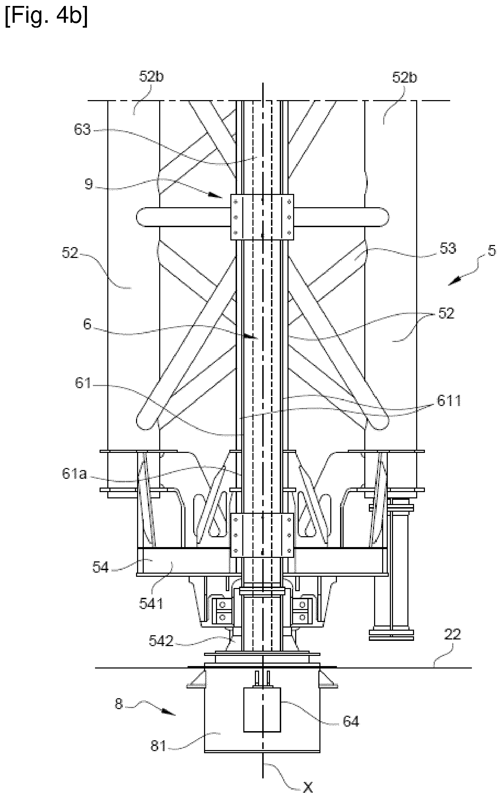

Comme visible à la figure 2, le dispositif de déchargement 6, distinct de la pompe de déchargement 55 logée dans l'un des mâts arrière 52b de la tour 5, comporte un conduit de déchargement 61, un élément d'aspiration 64 disposé à une première extrémité 61a du conduit de déchargement 61, et un ensemble d'entrainement 62 disposé à une deuxième extrémité 61b du conduit de déchargement 61. Le couvercle 7 est disposé entre l'élément d'aspiration 64, visible aux figures 4a et 4b, et l'ensemble d'entrainement 62. De manière plus précise, l'élément d'aspiration 64 est disposé dans le volume de stockage de la cuve 2 tandis que l'ensemble d'entrainement 62 est disposé en dehors du volume de stockage de la cuve 2 et est de préférence porté par la face extérieure du couvercle 7. Au moins un arbre d'entrainement 63, en partie visible aux figures 3 et 4b et représenté en pointillés, relie l'élément d'aspiration 64 à l'ensemble d'entrainement 62. Plus particulièrement, l'arbre d'entrainement 63 s'étend dans un volume interne du conduit de déchargement 61 et permet à l'élément d'aspiration 64 d'être actionné sous l'effet de l'élément d'entrainement 62 afin de permettre le pompage du gaz liquéfié et son extraction hors de la cuve.

Comme représenté figures 2 et 3, le conduit de déchargement 61 est un composant distinct de la tour de chargement et/ou déchargement 5. En d'autres termes, le conduit de déchargement 61 est un composant distinct de la structure 51.

Selon un mode de réalisation préférentiel, le conduit de déchargement 61 est situé en avant du mât avant 52a selon la direction longitudinale L de la cuve 2. Ainsi, le conduit de déchargement 61 n'est pas inscrit dans la forme triangulaire délimitée par chacun des mâts 52.Dans l'exemple représenté, le conduit de déchargement 61 s'étend parallèlement au mât avant 52a qui le supporte. Ainsi, le conduit de déchargement 61 et le mât avant 52a s'étendent selon la direction verticale V.

Comme représenté aux figures 3 et 4, le dispositif de déchargement 6 comprend également au moins une, et de préférence deux, tige 611 servant à contrôler un clapet dudit dispositif. La tige 611 est indépendante du conduit de déchargement 61 et s'étend le long de ce dernier.

Les différents éléments constituant le dispositif de déchargement 6 s'étendent le long de la direction d'allongement principal P selon la direction verticale V, perpendiculaire à la paroi de fond 22 de la cuve 2.

L'ensemble d'entraînement 62 peut notamment être un ensemble moto-réducteur comprenant un moteur et un dispositif de réduction de la vitesse de l'élément d'aspiration 64.

Afin d'améliorer l'aspiration du gaz liquéfié lors de son déchargement hors de la cuve 2, notamment lorsqu'une opération de maintenance est programmée, la paroi de fond 22 de la cuve est équipée d'un puisard 8 visible aux figures 2 à 4. Le puisard 8 correspond à un volume qui s'étend dans la paroi de fond 22 de la cuve 2 et qui est délimité par une paroi de puisard 81, ici cylindrique autour d'un axe de révolution X. Le puisard 8 permet notamment de former un volume réduit pour faciliter la collecte du gaz liquéfié par l'élément d'aspiration 64 du dispositif de déchargement 6 en concentrant ledit gaz liquéfié dans ce volume réduit par rapport au volume de stockage de la cuve 2. On comprend alors que l'élément d'aspiration 64 du dispositif de déchargement 6 s'étend au moins en partie dans le volume du puisard 8.

Comme visible aux figures 4a et 4b, le puisard 8 est formé dans la paroi de fond 22 de la cuve 2 de telle sorte qu'un centre de ce dernier, ici positionné sur son axe de révolution X, soit à une distance D, au moins supérieure à 2 m du centre F de du pied 542 de l'armature de base 54. On comprend que la distance est prise le long d'une droite perpendiculaire à l'axe de révolution X, entre ledit axe de révolution X et le centre F du pied 542 de l'armature de base 54, pris sur un axe central F de ce dernier.

Ainsi, l'élément d'aspiration 64 du dispositif de déchargement 6 est distinct des mâts 52 de la tour 5. Le dispositif de déchargement 6 se situe en dehors de la forme triangulaire délimitée par chacun des mâts 52.

Selon l'invention, au moins un dispositif de maintien 9 s'étend entre le conduit de déchargement 61 et un des mâts 52 de la structure 51. Le dispositif de maintien 9 permet de maintenir le conduit de déchargement 61 dans la direction verticale V et assure son maintien notamment lors du chargement de la cuve 2 ou encore lors du transport du gaz liquéfié. Selon l'exemple de l'invention, une pluralité de dispositifs de maintien 9 s'étend entre un des mâts 52 de la structure 51 et le conduit de déchargement 61, le long de ce dernier c'est-à-dire entre sa première extrémité 61a et le couvercle 7. Selon l'exemple illustré, l'au moins un dispositif de maintien 9 s'étend entre le conduit de déchargement 61 et le mât avant 52a de la structure 51, c'est-à-dire le mât 52 formant le sommet avant du triangle délimitant la structure 51.

Le dispositif de maintien 9 permet ainsi de faire la liaison entre le dispositif de déchargement 6 et la tour 5, tous les deux distincts de la paroi de fond 22 de la cuve. Ainsi, le dispositif de maintien 9 se trouve à distance de la paroi de fond 22 de la cuve.

De tels dispositifs de maintien 9 peuvent être réalisés selon différents modes de réalisation, exposés ci-après, et peuvent être aménagés à différents emplacements de la tour 5.

De préférence et comme représenté à la figure 2, les dispositifs de maintien 9 selon l'invention sont fixés sur le mât avant 52a au niveau de points de fixation de la structure en treillis 53 sur le mât avant 52a. Plus particulièrement, les dispositifs de maintien 9 sont fixés au niveau de points de rencontre de plusieurs poutrelles cylindriques constituant la structure en treillis 53 sur le mât avant 52a. Ainsi, les dispositifs de maintien 9 sont positionnés à des endroits où la rigidité de la tour 5 est maximale.

De manière complémentaire, un dispositif de maintien 9 peut également être positionné à une extrémité inférieure du mât avant 52a au niveau de laquelle est également fixée la plateforme 541 de l'armature de base 54.

Le dispositif de maintien 9 comprend au moins une bague 91, au travers de laquelle passe le conduit de déchargement 61 du dispositif de déchargement 6, et au moins un bras 92 équipé d'une interface de fixation 923 du dispositif de maintien 9 sur le mât avant 52a.

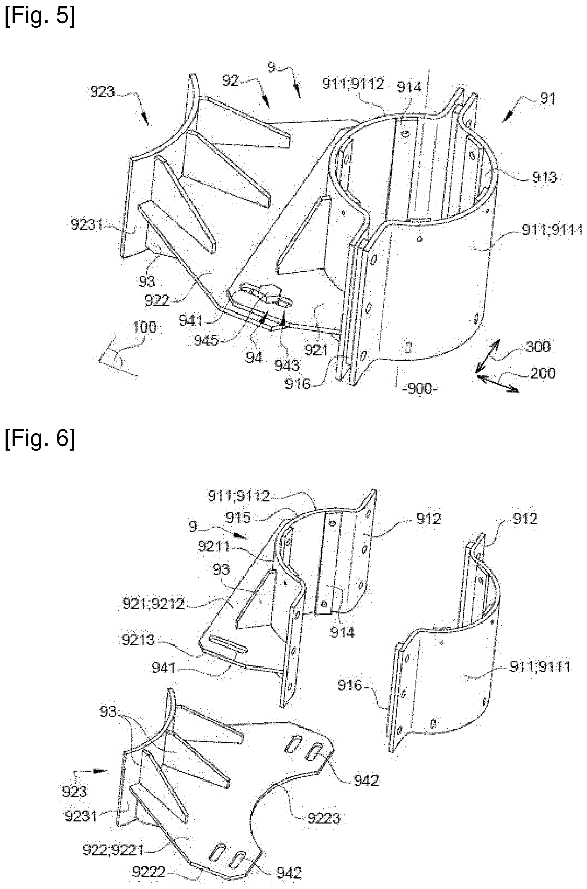

A partir de ce point va être décrit le premier mode de réalisation du dispositif de maintien 9 visible aux figures 5 et 6.

La bague 91 est composée de deux demi-coquilles 911, appelées première demi-coquille 9111 et deuxième demi-coquille 9112, de forme sensiblement identique. Lorsqu'elles sont assemblées, les demi-coquilles 911 forment la bague 91, cylindrique, destinée à entourer le conduit de déchargement 61. Alternativement, la bague 91 peut comprendre plus de deux portions de formes complémentaires, assemblées pour former la bague 91. Selon une autre alternative, la bague 91 peut comprendre une unique pièce cylindrique.

Chacune des demi-coquilles 911 comprend deux ailettes 912, les ailettes 912 de l'une des demi-coquilles 911 étant mises en contact puis solidarisées, ici par boulonnage, avec les ailettes 912 de la demi-coquille 911 complémentaire afin d'assembler la bague 91. Notamment, dans l'exemple illustré, la bague 91 est centrée sur un axe d'extension 900 du dispositif de maintien 9 s'étendant dans la direction verticale V.

En outre, une cale 916 est positionnée entre deux ailettes 912 disposées en vis-à-vis et destinées à être fixées l'une à l'autre. Cette cale 916 vise plus particulièrement à assurer le maintien de la ou des tige(s) 611 sur le conduit de déchargement 61. Chaque tige 611 est retenue dans la bague 91. De préférence, chaque tige 611 s'étend entre deux ailettes 912 assemblées. Ainsi, en position assemblée, chaque tige 611 s'étend entre une cale 916 et le conduit de déchargement 61.

Une paroi interne 913 de la bague 91 est équipée d'une pluralité de patins de glissement 914 permettant le déplacement du conduit de déchargement 61 le long de l'axe d'extension 900, notamment observé en résultat de la dilatation thermique du conduit de déchargement 61. Les patins de glissement 914 peuvent être réalisés dans un matériau tel que du PTFE (pour polytétrafluoroéthylène) ou du HDPE (de l'anglais « High density polyethylene ») et s'étendent parallèlement à l'axe d'extension 900, sur une hauteur de la bague 91 mesurée le long de ce même axe. Alternativement, les patins de glissement 914 peuvent s'étendre seulement sur une partie de la hauteur de la bague 91.

Le bras 92 du dispositif de maintien 9 comprend un premier segment 921, un deuxième segment 922 et l'interface de fixation 923. Le premier segment 921 et le deuxième segment 922 présentent chacun la forme d'une plaque plane. Par exemple, chaque segment 921, 922 peut consister en une pièce de tôle d'épaisseur d'au moins 5 mm. Le premier segment 921 et le deuxième segment 922 sont initialement dissociés l'un de l'autre, leur solidarisation étant réalisée lors de leur montage sur la tour 5.

De préférence, le deuxième segment 922 possède une longueur supérieure au diamètre de la bague 91.

Le premier segment 921 est solidaire de l'une des demi-coquilles 911 de la bague 91. Le premier segment 921 comprend une découpe 9211 de forme complémentaire à une paroi externe 915 de la demi-coquille 911, afin que le premier segment 921 soit en contact avec la paroi externe 915 de la bague 91 et entoure, au moins partiellement, la demi-coquille 911 qui lui est rattachée. Ainsi, une fois le dispositif de maintien 9 assemblé, le premier segment 921 porte la bague 91.

De même, le deuxième segment 922 porte l'interface de fixation 923, cette dernière s'étendant transversalement, par exemple perpendiculairement, à un plan dans lequel s'inscrit principalement ledit deuxième segment 922.

Lorsque le dispositif de maintien 9 est assemblé, le premier segment 921 et le deuxième segment 922 s'étendent en partie en vis-à-vis l'un de l'autre. Tel qu'illustré, le premier segment 921 et le deuxième segment 922 s'étendent parallèlement à un premier plan 100 du dispositif de maintien 9 qui est orthogonal à l'axe d'extension 900 du dispositif de maintien 9 et/ ou à l'axe principal 500 d'au moins l'un des mâts 52 de la tour 5.

Le premier segment 921 et le deuxième segment 922 possèdent chacun des moyens d'assemblage 94 permettant la solidarisation de ces deux éléments l'un à l'autre afin de constituer le bras 92.

Le premier segment 921 et le deuxième segment 922 sont particulièrement configurés pour être déplacés l'un par rapport à l'autre dans une première direction 200 et une deuxième direction 300, comprises dans le premier plan 100. De préférence, la première direction 200 et la deuxième direction 300 sont perpendiculaires l'une à l'autre.

Les moyens d'assemblage 94 comprennent une première paire de trous oblongs 941 réalisés dans le premier segment 921, un seul de ces trous oblongs est visible sur les figures 5 et 6, chaque trou oblong est configuré pour recevoir au moins un organe de fixation 945. Les trous oblongs 941 s'étendent parallèlement l'un à l'autre, une dimension la plus longue de chacun des trous oblongs 941 s'étendant parallèlement à la première direction 200 et perpendiculairement à l'axe d'extension 900 du dispositif de maintien. Chaque trou oblong 941 s'étend de préférence au niveau d'une extrémité latérale du premier segment 921.

Les moyens d'assemblage 94 comprennent également au moins une deuxième paire de trous oblongs 942 réalisés dans le deuxième segment 922, par exemple deux deuxièmes paires de trous oblongs 942. Chaque trou oblong 942 du deuxième segment 922 s'étend au moins en partie en regard de l'un des trous oblongs 941 du premier segment 921 lorsque le dispositif de maintien 9 est assemblé. Particulièrement, une dimension la plus longue d'un trou oblong 942 du deuxième segment 922 s'étend parallèlement à la deuxième direction 300, et donc sensiblement perpendiculairement à la première direction 200 d'au moins l'un des trous oblongs 941 du premier segment 921.

Les trous oblongs 941, 942 des premier segment 921 et deuxième segment 922 constituent également des moyens de réglage 943 permettant un ajustement du positionnement des différents segments 921, 922 entre eux. Ainsi, suivant la position de l'organe de fixation dans les trous oblongs respectivement des premier segment 921 et deuxième segment 922, la position des différents segments 921, 922 pourra varier.

Les organes de fixation 945 utilisés pour solidariser le premier segment 921 et le deuxième segment 922 peuvent être constitués par des systèmes vis-écrou ou tout autre moyen approprié, les organes de fixation 945 devant être conçus de manière à prévoir un déplacement des segments 921, 922 entre eux au cours du montage du dispositif de déchargement 6 ou au cours d'un démontage ultérieur.

Une face du premier segment 921 est ainsi solidarisée avec une face du deuxième segment 922. Le premier segment 921 comprend une première face 9212, tournée vers le couvercle 7 de la tour 5, et une deuxième face 9213, tournée vers la paroi de fond 22 de la cuve, tandis que le deuxième segment 922 comprend une première face 9221, tournée vers le couvercle 7, et une deuxième face 9222, opposée, tournée vers la paroi de fond 22 de la cuve. Notamment, dans le dispositif de maintien 9 tel qu'illustré, la deuxième face 9213 du premier segment 921 est solidaire de la première face 9221 du deuxième segment 922. Ainsi, le premier segment 921, porteur de la bague 91 et donc du conduit de déchargement 61, est porté par le deuxième segment 922.

L'interface de fixation 923 permet la solidarisation du dispositif de maintien 9 sur la tour 5. De préférence, l'interface de fixation 923 est fixée sur le mât avant 52a de la tour. Une telle interface peut, tel qu'illustré, permettre le maintien du conduit de déchargement 61 sur la tour 5 en différents points suivant la hauteur de cette dernière, le conduit de déchargement 61 s'étendant de manière à passer à travers la bague 91.

L'interface de fixation 923 présente la forme d'une coque de section en forme d'arc de cercle. L'interface de fixation 923 est portée par le deuxième segment 922 et est destinée à être fixée sur la tour 5, par exemple par soudage.

Bien évidemment, d'autres formes d'interface de fixation peuvent être envisagées.

Le dispositif de maintien 9 comprend une pluralité de renforts 93 consolidant respectivement la liaison du premier segment 921 avec la demi-coquille 911 à laquelle le premier segment 921 est rattaché, et la liaison du deuxième segment 922 avec l'interface de fixation 923. Ainsi, les renforts 93 s'étendent entre la première face 9212 du premier segment 921 et la paroi externe 915 de la bague 91 ou entre la première face 9221 du deuxième segment 922 et un premier flanc 9231 de l'interface de fixation 923. Également, les renforts 93 peuvent s'étendre entre la deuxième face 9222 du deuxième segment 922 et le premier flanc 9231 de l'interface de fixation 923.

Dans l'exemple représenté, il n'y a pas de renfort entre la deuxième face 9213 du premier segment 921 et la paroi externe 915 de la bague 91 afin de ne pas gêner l'assemblage des différents éléments entre eux. Toutefois selon une variante de réalisation, la présence de tels renforts peut être envisagée notamment en cas d'un redimensionnement de ces différents éléments.

Le deuxième segment 922, solidaire de l'interface de fixation 923, comprend une deuxième découpe 9223. La deuxième découpe 9223 est particulièrement configurée afin de faciliter le montage/démontage du dispositif de maintien 9, par exemple en laissant passer une bride retenant le conduit de déchargement 61. De préférence, la deuxième découpe 9223 présente une échancrure plus importante que la découpe 9211 du premier segment 921 et, lorsque le dispositif de maintien est assemblé, le premier segment 921 couvre, au moins partiellement, la deuxième découpe 9223.

Le dispositif de maintien 9 selon l'invention assure un bon maintien du dispositif de déchargement 6 dans la cuve et amène à ce dernier la résistance mécanique nécessaire, notamment face aux ballotements susceptibles d'être engendrés par la cargaison de gaz liquéfié dans la cuve. L'utilisation du dispositif de maintien contribue à limiter le mouvement de l'élément d'aspiration 64 mais également les risques de distorsion de ce dernier.

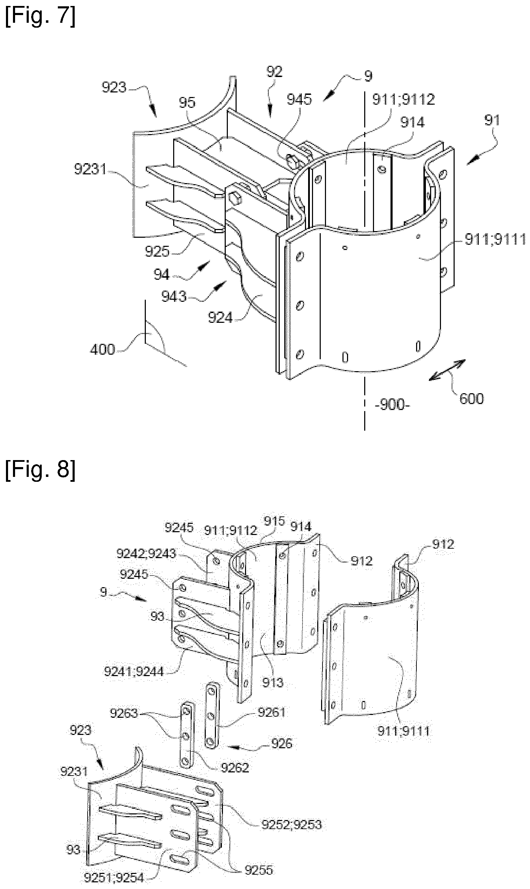

Le second mode de réalisation du dispositif de maintien 9 visible aux figures 7 et 8 va à partir de ce point être décrit. Les éléments communs avec le premier mode de réalisation utiliseront les mêmes références et ne seront pas à nouveau décrits.

Ainsi, le dispositif de maintien 9 selon le second mode de réalisation comprend, de manière identique au premier mode de réalisation, un bras 92 comprenant un premier segment 924, portant la bague 91 au travers de laquelle passe le conduit de déchargement 61 du dispositif de déchargement 6, et un deuxième segment 925 portant l'interface de fixation 923. Ce dispositif de maintien 9 comprend également un ensemble de liaison 926 destiné à assurer la fixation du premier segment 924 et du deuxième segment 925 l'un à l'autre, comme cela va être décrit par la suite. L'ensemble de liaison 926 est plus particulièrement composé de deux platines 9261 et 9262, destinées chacune à s'interposer entre des zones de fixation du premier segment 924 et du deuxième segment 925 disposées en vis-à-vis.

De préférence, le deuxième segment 925 possède une longueur inférieure au diamètre de la bague 91.

Les platines 9261, 9262 de l'ensemble de liaison 926 sont de préférence de forme identiques. Chaque platine 9261, 9262 comporte une forme oblongue et est munie d'orifice 9263. Dans l'exemple représenté, chaque platine 9261, 9262 comporte trois orifices 9263 de forme circulaire.

Le premier segment 924 comporte deux ailes 9241 et 9242 s'étendant à distance l'une de l'autre et espacées selon une première direction 600 s'étendant perpendiculairement à l'axe d'extension 900 du dispositif de maintien et/ou à l'axe principal 500 d'au moins l'un des mâts 52 de la tour 5.

De préférence, les deux ailes 9241, 9242 s'étendent parallèlement l'une à l'autre et s'étendent chacune dans un plan parallèle à un premier plan 400 qui est parallèle à l'axe d'extension 900 du dispositif de maintien 9 et/ou à l'axe principal 500 d'au moins l'un des mâts 52 de la tour 5. Chaque aile 9241, 9242 comporte une face interne 9243 et une face externe 9244. Les faces internes 9243 se font face et sont situées en vis-à-vis l'une de l'autre, tandis que les faces externes 9244 sont opposées aux faces internes et sont tournées vers les parois de la cuve.

De même, le deuxième segment 925 comporte deux ailes 9251 et 9252 s'étendant à distance l'une de l'autre et espacées selon la première direction 600 s'étendant perpendiculairement à l'axe d'extension 900 du dispositif de maintien et/ou à l'axe principal 500 d'au moins l'un des mâts 52 de la tour 5.

De préférence, les deux ailes 9251, 9252 s'étendent parallèlement l'une à l'autre et s'étendent chacune dans un plan parallèle au premier plan 400 qui est parallèle à l'axe d'extension 900 du dispositif de maintien 9 et/ou à l'axe principal 500 d'au moins l'un des mâts 52 de la tour 5. Chaque aile 9251, 9252 comporte une face interne 9253 et une face externe 9254. Les faces internes 9253 se font face et sont situées en vis-à-vis l'une de l'autre, tandis que les faces externes 9254 sont opposées aux faces internes et sont tournées vers les parois de la cuve.

Comme dans le premier mode de réalisation, le dispositif de maintien 9 comprend une pluralité de renforts 93 consolidant respectivement la liaison du premier segment 924 avec la demi-coquille 911 à laquelle le premier segment 924 est rattaché, et la liaison du deuxième segment 925 avec l'interface de fixation 923. Ainsi, les renforts 93 s'étendent entre chaque face externe 9244 de chaque aile 9241, 9242 du premier segment 924 et la paroi externe 915 de la bague 91. Comme représenté, les renforts 93 peuvent également s'étendre entre chaque face externe 9254 de chaque aile 9251, 9252 du deuxième segment 925 et le premier flanc 9231 de l'interface de fixation 923.

Dans un tel mode de réalisation, les renforts 93 s'étendent dans un plan qui est orthogonal au premier plan 400.

Le deuxième segment 925 comprend en outre au moins un renfort intérieur 95 destiné à relier sensiblement en leur milieu, chaque face interne 9253 de chaque aile 9251,9252.

Dans l'exemple représenté, l'écartement entre les ailes 9251, 9252 du deuxième segment 925 est inférieur à l'écartement entre les ailes 9241, 9242 du premier segment 924, de manière à permettre lors de l'assemblage du bras 92 la solidarisation de chaque aile du premier segment avec une aile du deuxième segment située en vis-vis. Plus particulièrement, l'écartement est adapté de manière à permettre l'insertion de chaque platine 9261, 9262 de l'ensemble de liaison 926 comme cela sera décrit ci-après.

Le premier segment 924, le deuxième segment 925 et l'ensemble de liaison 926 possèdent chacun des moyens d'assemblage 94 permettant la solidarisation de ces trois éléments afin de constituer le bras 92.

Les moyens d'assemblage 94 de l'ensemble de liaison 926 sont constitués par les orifices 9263 des platines 9261, 9262.

Les moyens d'assemblage 94 comprennent en outre des trous circulaires 9245 réalisés dans chaque aile 9241, 9242 du premier segment 924. Les trous circulaires 9245 sont régulièrement répartis sur chaque extrémité libre des aile 9241, 9242, l'extrémité dite libre étant celle opposée à l'extrémité fixée à la bague 91. Les trous circulaires 9245 peuvent être, par exemple, au nombre de trois par aile 9241, 9242.

Les moyens d'assemblage 94 comprennent en outre des trous oblongs 9255 réalisés dans chaque aile 9251, 9252 du deuxième segment 925. Les trous oblongs 9255 sont régulièrement répartis sur chaque extrémité libre des aile 9251, 9252, l'extrémité dite libre étant celle opposée à l'extrémité fixée à l'interface de fixation 923. Les trous oblongs 9255 peuvent être, par exemple, au nombre de trois par aile 9251, 9252.

Les trous oblongs 9255 s'étendent parallèlement l'un à l'autre, une dimension la plus longue de chacun des trous oblongs 9255 s'étendant perpendiculairement à la première direction 600 et perpendiculairement à l'axe d'extension 900 du dispositif de maintien.

Les moyens d'assemblage 94 comprennent en outre des organes de fixation 945, tel que des ensembles vis-écrous destinés à relier les trous circulaires de l'ensemble de liaison 926 et du premier segment 924, avec les trous oblongs du deuxième segment 925.

Ainsi en position assemblée du bras 92, la face externe 9254 de chaque aile 9251, 9252 du deuxième segment 925 est disposée en vis-à-vis de la face interne 9243 d'une aile 9241, 9242 du premier segment 924. Une platine 9261, 9262 est interposée entre la face externe 9254 et la face interne 9243. Ces différentes pièces sont positionnées de façon à ce que leurs orifices respectifs se trouvent en vis-à-vis de manière à pouvoir être traversés par les organes de fixations 945.

Les différents trous ou orifices des premier et deuxième segment 924, 925 ainsi que de l'ensemble de liaison 926 constituent également les moyens de réglage 943 permettant un ajustement du positionnement des différents segments 924, 925 entre eux. Ainsi, suivant la position de l'organe de fixation dans les trous ou orifices, la position des différents segments 924, 925 pourra varier.

Selon une variante non représentée, l'écartement entre les ailes 9251, 9252 du deuxième segment 925 peut être supérieure à l'écartement entre les ailes 9241, 9242 du premier segment 924. De même, le positionnement des trous oblongs et des orifices circulaires peut varier.

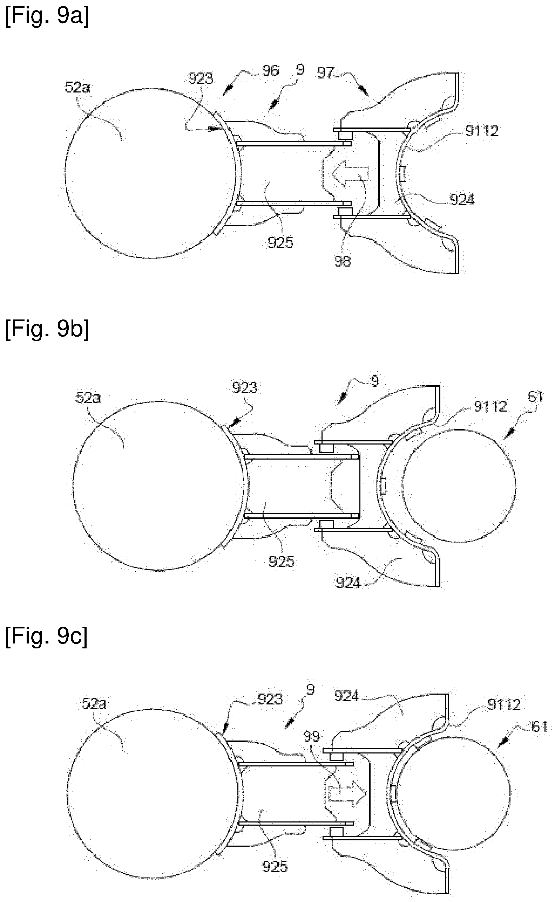

A partir de ce point, les différentes étapes de montage du dispositif de maintien 9 réalisé selon le second mode de réalisation et destiné à solidariser le mât avant 52a et le conduit de déchargement 61 du dispositif de déchargement 6 disposé à proximité va être décrit en relation avec les figures 9a à 9d. Afin de faciliter la compréhension, l'ensemble de liaison 926 n'est pas représenté sur ces figures

Au cours d'une étape antérieure non représentée, le sous-ensemble 96 constitué par l'interface de fixation 923 et le deuxième segment 925, ci-après nommé premier sous-ensemble, est solidarisé au mât avant 52a, de préférence par soudage.

Lors de la première étape représentée à la figure 9a, le sous-ensemble 97 constitué par le premier segment 924 et la deuxième demi-coquille 9112, ci-après nommé second sous-ensemble, est fixé au premier sous-ensemble 96. Au cours de cette première étape, le premier segment 924, le deuxième segment 925 et l'ensemble de liaison 926 sont solidarisés par l'intermédiaire des organes de fixations 945 de manière à définir une première position. Dans cette première position, le premier sous-ensemble 96 et le second sous-ensemble 97 sont rapprochés l'un de l'autre comme le montre la flèche 98, de manière à ce que leur chevauchement soit maximal. Dans cette position, le second sous-ensemble 97 se trouve au plus près du mât 52a.

Au cours de la seconde étape représentée à la figure 9b, le conduit de déchargement 61 du dispositif de déchargement 6 est approché du second sous-ensemble 97. Ainsi, le conduit de déchargement 61 est descendu le long du mât 52a et passe à côté du second sous-ensemble 97, tout en restant à distance de ce dernier. La position du conduit de déchargement 61 est définie par les différents éléments constituant le dispositif de déchargement 6 et plus particulièrement par l'élément d'aspiration 64 et l'ensemble d'entraînement 62, ces derniers devant être alignés avec le conduit de déchargement 61 afin d'éviter toute torsion du dispositif de déchargement 6. Lors du montage du dispositif de déchargement 6, l'élément d'aspiration 64 est centré sur l'axe de révolution X de la paroi de puisard 81. Comme le montre la figure 9b, à la fin de la seconde étape, le conduit de déchargement 61 se trouve à distance de la paroi interne 913 de la deuxième demi-coquille 9112.

Une fois la position définitive du conduit de déchargement 61 atteinte, le second sous-ensemble 97 est déplacé par rapport au premier sous-ensemble 96. Plus particulièrement, le second sous-ensemble 97 est déplacé de manière à permettre l'accostage du second sous-ensemble 97, et plus particulièrement de la paroi interne 913 de la deuxième demi-coquille 9112, avec le conduit de déchargement 61. Ce déplacement, illustré par la flèche 99, correspond à la troisième étape de montage représenté à la figures 9c.

Le positionnement entre le premier sous-ensemble 96 et le second sous-ensemble 97 est réalisé grâce aux moyens de réglage 943 qui permettent un déplacement des premier segment 924 et deuxième segment 925 dans le premier plan 400, et plus précisément un déplacement selon deux directions comprises dans ce même premier plan 400. Les organes de fixations 945 peuvent alors être repositionnés de façon à fixer la nouvelle position du premier sous-ensemble 96 et du second sous-ensemble 97

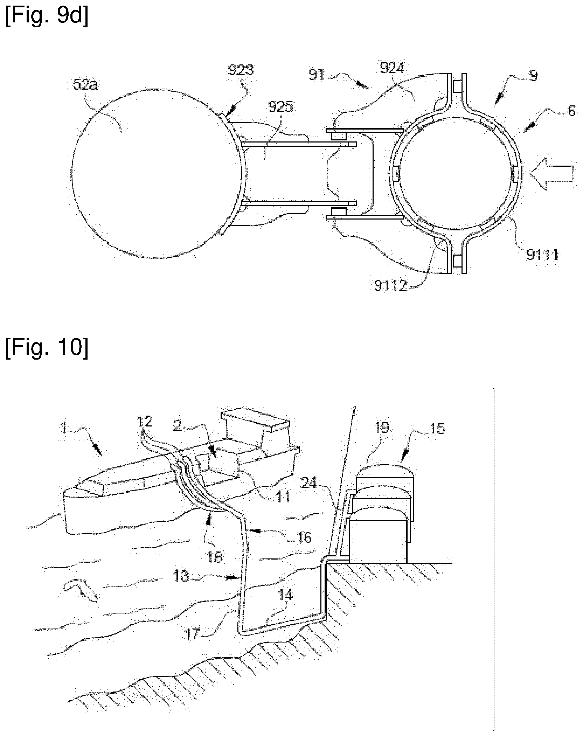

Une fois la position adéquate obtenue, au cours d'une dernière étape représentée à la figure 9d, la première demi-coquille 9111 est approchée et fixée à la deuxième demi-coquille 9112 grâce à la solidarisation de leurs ailettes 912.

L'ensemble de ces étapes est répété autant de fois que nécessaire selon le nombre de dispositifs de maintien 9 à positionner le long de la tour 5.

L'utilisation du dispositif de maintien 9 selon l'invention présente l'avantage également de simplifier le désassemblage de la tour 5 lors d'opérations de maintenance nécessitant l'extraction d'un élément. En effet, le deuxième segment 925 et l'interface de fixation 923 peuvent rester solidaires de la tour 5, tandis que le premier segment 924 est dissocié du deuxième segment 925. L'accès au dispositif de déchargement 6 se trouve ainsi facilité. Ainsi, en cas d'opération de maintenance il n'est pas nécessaire de retirer intégralement le dispositif de maintien 9 selon l'invention pour permettre l'extraction du dispositif de déchargement 6 ou de l'un de ses composants. Il en résulte également une simplification du réassemblage de l'ensemble de ces éléments puisqu'il n'est pas nécessaire de repositionner et fixer l'interface de fixation 923 et le deuxième segment 925.

Le procédé de montage ici exposé en relation avec le second mode de réalisation s'applique bien entendu au premier mode de réalisation.

L'invention ne saurait toutefois se limiter aux moyens et configurations décrits et illustrés ici, et elle s'étend également à tout moyen ou configuration équivalents et à toute combinaison technique opérant de tels moyens. En particulier, le type d'interface de fixation, les dimensions ou la forme des bras, et les moyens d'assemblage utilisés pour solidariser les différents segments du bras pourront être modifiés sans nuire à l'invention, dans la mesure où le dispositif de réglage, in fine, remplit les mêmes fonctionnalités que celles décrites dans ce document.

De plus, le dispositif de maintien décrit peut également s'appliquer à tout autre fin de fixation de composants destinés à coopérer avec l'un des éléments de la tour 5.

En référence à la figure 10, une vue écorchée d'un navire méthanier 1 montre une cuve étanche et isolée 2 de forme générale prismatique montée dans la double coque 11 du navire.

De manière connue en soi, des canalisations de chargement/déchargement 12 disposées sur le pont supérieur du navire peuvent être raccordées, au moyen de connecteurs appropriées, à un terminal maritime ou portuaire pour transférer une cargaison de GNL depuis ou vers la cuve 2.

La figure 10 représente également un exemple de terminal maritime comportant un poste de chargement et de déchargement 13, une conduite sous-marine 14 et une installation à terre 15. Le poste de chargement et de déchargement 13 est une installation fixe off-shore comportant un bras mobile 16 et une tour 17 qui supporte le bras mobile 16. Le bras mobile 16 porte un faisceau de tuyaux flexibles isolés 18 pouvant se connecter aux canalisations de chargement/déchargement 12. Le bras mobile 16 orientable s'adapte à tous les gabarits de méthaniers. Une conduite de liaison non représentée s'étend à l'intérieur de la tour 17. Le poste de chargement et de déchargement 13 permet le chargement et le déchargement du méthanier 1 depuis ou vers l'installation à terre 15. Celle-ci comporte des cuves de stockage de gaz liquéfié 19 et des conduites de liaison 24 reliées par la conduite sous-marine 14 au poste de chargement ou de déchargement 13. La conduite sous-marine 14 permet le transfert du gaz liquéfié entre le poste de chargement ou de déchargement 13 et l'installation à terre 15 sur une grande distance, par exemple 5 km, ce qui permet de garder le navire méthanier 1 à grande distance de la côte pendant les opérations de chargement et de déchargement.

Pour engendrer la pression nécessaire au transfert du gaz liquéfié, on met en oeuvre des pompes embarquées dans le navire 2 et/ou des pompes équipant l'installation à terre 15 et/ou des pompes équipant le poste de chargement et de déchargement 13.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Ensemble de chargement et/ou de déchargement (4) pour une cuve (2) d'un navire (1) destinée à contenir un gaz liquéfié comprenant une tour de chargement et/ou de déchargement (5) munie d'au moins un mât (52) destiné à s'étendre dans la cuve (2), au moins un dispositif de déchargement (6) distinct de la tour de chargement et/ou de déchargement et au moins un dispositif de maintien (9) maintenant au moins une partie du dispositif de déchargement (6) sur la tour de chargement et/ou de déchargement (5), le dispositif de maintien (9) maintenant de préférence au moins une partie du dispositif de déchargement (6) sur le mat (52),
le dispositif de maintien (9) comprenant au moins une bague (91), au travers de laquelle passe au moins une partie du dispositif de déchargement (6), et au moins un bras (92), le bras (92) comprenant au moins un premier segment (921, 924) portant la bague (91) et un deuxième segment (922, 925) portant une interface de fixation (923) du dispositif de maintien (9) sur la tour de chargement et/ou de déchargement (5), et en ce que le premier segment (921, 924) et le deuxième segment (922, 925) sont configurés pour être déplacés l'un par rapport à l'autre selon au moins deux directions comprises dans un même plan (100, 400).

2. Ensemble de chargement et/ou de déchargement (4) selon la revendication 1, dans lequel ledit plan (100, 400) est parallèle au premier segment (921, 924) et/ou au deuxième segment (922, 925) du bras (92).

3. Ensemble de chargement et/ou de déchargement (4) selon la revendication 1 ou 2, dans lequel la bague (91) est centrée sur un axe d'extension (900) du dispositif de maintien (9) et dans lequel l'axe d'extension (900) s'étend parallèlement audit plan (400).

4. Ensemble de chargement et/ou de déchargement (4) selon la revendication 1 ou 2, dans lequel la bague (91) est centrée sur un axe d'extension (900) du dispositif de maintien (9) et dans lequel l'axe d'extension (900) s'étend orthogonalement audit plan (100), de préférence, l'axe d'extension (900) s'étend perpendiculairement audit plan (100).

5. Ensemble de chargement et/ou de déchargement (4) selon l'une quelconque des revendications 1 à 4, dans lequel la bague (91) est composée d'au moins une première demi-coquille (911, 9111) et une deuxième demi-coquille (911, 9112), la première demi-coquille (911, 9111) et/ou la deuxième demi-coquille (911, 9112) étant portée par le premier segment (921, 924).

6. Ensemble de chargement et/ou de déchargement (4) selon l'une quelconque des revendications 1 à 5, dans lequel le dispositif de maintien (9) comprend au moins un renfort (93) solidaire du premier segment (921, 924) et de la bague (91) et/ou du deuxième segment (922, 925) et de l'interface de fixation (923).

7. Ensemble de chargement et/ou de déchargement (4) selon l'une quelconque des revendications 1 à 6, dans lequel le premier segment (924) et le deuxième segment (925) comportent chacun respectivement deux ailes (9241, 9242, 9251, 9252) s'étendant à distance l'une de l'autre, l'écartement entre les ailes (9241, 9242) du premier segment (924) étant différent de l'écartement entre les ailes (9251, 9252) du deuxième segment (925), de manière à permettre un chevauchement entre chaque aile du premier segment avec une aile du second segment située en vis-vis.

8. Ensemble de chargement et/ou de déchargement (4) selon la revendication 7, dans lequel l'écartement entre les ailes (9241, 9242) du premier segment (924) est supérieur à l'écartement entre les ailes (9251, 9252) du deuxième segment (925).

9. Ensemble de chargement et/ou de déchargement (4) selon la revendication 7 ou 8, dans lequel les ailes (9241, 9242, 9251, 9252) des premier et deuxième segments (924, 925) comportent chacune des faces internes disposées de manière à ce qu'une face interne d'une aile d'un segment soit disposée en vis-à-vis d'une face interne de l'autre aile dudit segment et des faces externes opposées audites faces internes, chaque face interne d'une aile du premier segment (924) étant de préférence disposée en vis-à-vis d'une face externe d'une aile du deuxième segment (925).

10. Ensemble de chargement et/ou de déchargement (4) selon la revendication 9, dans lequel au moins un ensemble de liaison (926) est disposé entre la face interne d'une aile d'un segment et la face externe d'une aile de l'autre segment disposé en vis-à-vis.

11. Ensemble de chargement et/ou de déchargement (4) selon l'une quelconque des revendications 1 à 10, dans lequel le premier segment (921, 924) et le deuxième segment (922, 925) sont solidarisés l'un à l'autre par des moyens d'assemblage (94), lesdits moyens d'assemblage (94) étant de préférence amovibles.

12. Ensemble de chargement et/ou de déchargement (4) selon la revendication 11, dans lequel les moyens d'assemblage (94) comprennent au moins un organe de fixation (945) du premier segment (921, 924) sur le deuxième segment (922, 925), le premier segment (921,924) et/ou le second segment (922, 925) comprenant au moins un trou oblong (941, 942, 9255) qui reçoit l'organe de fixation (945).

13. Ensemble de chargement et/ou de déchargement (4) selon la revendication 12, dans lequel le premier segment (921) et le second segment (922) comprennent chacun au moins un trou oblong (941, 942) au moins partiellement disposé en vis-à-vis l'un de l'autre, le trou oblong (941, 942) d'un segment s'étendant majoritairement dans une direction perpendiculaire à une direction d'extension majoritaire du trou oblong de l'autre segment.

14. Ensemble de chargement et/ou de déchargement (4) selon l'une quelconque des revendications 1 à 13, dans lequel le dispositif de déchargement (6) comprend au moins un élément d'aspiration (64), disposé dans la cuve (2), et un ensemble d'entraînement (62) de l'élément d'aspiration (64), disposé en dehors de la cuve (2), l'élément d'aspiration (64) et l'ensemble d'entraînement (62) étant reliés l'un à l'autre par un conduit de déchargement (61), la bague (91) du dispositif de maintien (9) entourant au moins en partie le conduit de déchargement (61).

15. Cuve (2) d'un navire (1) destinée à contenir un gaz liquéfié comprenant un ensemble de chargement et/ou de déchargement selon l'une quelconque des revendications 1 à 14.

16. Procédé de montage d'un ensemble de chargement et/ou de déchargement (4) pour une cuve (2) d'un navire (1) destinée à contenir un gaz liquéfié selon l'une quelconque des revendications 1 à 14 prise en combinaison avec la revendication 5, le procédé comprenant la fixation du deuxième segment (922, 925) sur la tour de chargement et/ou de déchargement (5) par l'intermédiaire de l'interface de fixation (923), ledit procédé comportant les étapes suivantes :
- une première étape de fixation du premier segment (921, 924) et de la deuxième demi-coquille (911, 9112) portée par le premier segment sur le deuxième segment (922, 925) dans une première position dite de réglage dans laquelle le premier segment est positionné au plus proche de la tour de chargement et/ou de déchargement (5) ;
- une deuxième étape de positionnement définitif d'au moins un élément du dispositif de déchargement (6) dans la cuve ;
- une troisième étape de déplacement du premier segment (921, 924) et de la deuxième demi-coquille (911, 9112) vers une deuxième position dite définitive dans laquelle la deuxième demi-coquille (911, 9112) est positionnée au plus près de l'élément du dispositif de déchargement (6) ;
- une quatrième étape d'assemblage et de fixation de la première demi-coquille (911, 9111) sur la deuxième demi-coquille (911, 9112) de manière à entourer ledit élément du dispositif de déchargement (6) entre la première demi-coquille (911, 9111) et la deuxième demi-coquille (911, 9112).

17. Procédé de montage d'un dispositif de déchargement (6) selon la revendication 16, dans lequel ledit élément du dispositif de déchargement (6) est un conduit de déchargement (61).

18. Navire (1) pour le transport d'un produit liquide froid, le navire comportant une double coque (11) et une cuve (2) selon la revendication 15 disposée dans la double coque.

19. Système de transfert pour un produit liquide froid, le système comportant un navire (1) selon la revendication 18, des canalisations isolées (12, 13, 18, 24) agencées de manière à relier la cuve (2) installée dans la double coque du navire à une installation de stockage flottante ou terrestre (15) et une pompe pour entraîner un fluide à travers les canalisations isolées depuis ou vers l'installation de stockage flottante ou terrestre vers ou depuis la cuve du navire.

20. Procédé de chargement ou déchargement d'un navire (1) selon la revendication 18, dans lequel on achemine un fluide à travers des canalisations isolées (12, 13, 18, 24) depuis ou vers une installation de stockage flottante ou terrestre (15) vers ou depuis la cuve du navire (2).
